# FASCICULE DE BREVET EUROPEEN

(11) **EP 1 630 350 B1**
(45) Date de publication et mention de la délivrance du brevet: **21.03.2007**
(21) Numéro de dépôt: 05291724.2
(22) Date de dépôt: 12.08.2005
(51) Int. Cl.: F01D 5/14

(54) **Aube de rotor d'un compresseur ou d'une turbine à gaz**
Laufschaufel eines Verdichters oder einer Gasturbine
Rotor blade of a compressor or a gas turbine

(30) Priorité: 23.08.2004 FR 0409036
(43) Date de publication de la demande: 01.03.2006
(73) Titulaire: SNECMA, 75015 Paris (FR)
(72) Inventeur: Bil, Eric, 77590 Chartrettes (FR); Giot, Chantal, 77380 Combs la Ville (FR); Schlesinger, Thomas, 92150 Suresnes (FR)
(74) Mandataire: Ramey, Daniel

(56) Documents cités:
- EP-A- 1 101 898
- US-A- 5 443 365
- US-A- 6 146 099
- US-A- 6 158 962

## Description

La présente invention concerne une aube de rotor d'un compresseur ou d'une turbine à gaz, ainsi qu'un compresseur ou une turbine industriel ou de turboréacteur comprenant une pluralité de ces aubes.

Une aube de rotor d'un compresseur ou d'une turbine à gaz comprend un extrados ou surface extérieure convexe et un intrados ou surface intérieure concave qui sont reliés à leurs extrémités amont par un bord d'attaque et à leurs extrémités aval par un bord de fuite des gaz. L'intrados et l'extrados sont rattachés à une plate-forme qui est pourvue d'un pied d'aube du type en queue d'aronde, en sapin ou analogue, destiné à être inséré dans une cavité correspondante d'un disque de rotor du compresseur ou de la turbine à gaz.

Un voile de renfort latéral appelé « raidisseur » est formé sous la plate-forme, entre une surface intérieure de celle-ci et une surface latérale du pied d'aube, et s'étend transversalement sous une partie aval de la plate-forme. Si nécessaire, un autre raidisseur est formé également sous une partie amont de la plate-forme.

Ces raidisseurs servent aussi de support à une chemise d'étanchéité agencée entre deux aubes adjacentes pour empêcher le passage d'air depuis la partie interne de la turbine radialement vers les intrados et extrados des aubes, et inversement empêcher le passage de gaz ou d'air depuis les intrados et extrados des aubes jusqu'à la partie interne de la turbine à gaz. L'air froid de la partie interne peut s'engager ainsi dans des orifices d'entrée d'air prévus à l'extrémité des pieds d'aubes et alimentant un réseau de conduits de ventilation formés à l'intérieur des aubes pour leur refroidissement.

Une aube de rotor dont la plate-forme est reliée au pied d'aube par des nervures latérales de renfort est décrite dans le document US-A-6 158 962. Le document EP-A-1 101 898 décrit une aube de rotor dont la plate-forme comprend des moyens de réduction de contraintes thermiques, formés par une réduction de l'épaisseur de la plate-forme au voisinage du bord de fuite.

En fonctionnement du compresseur ou de la turbine, les intrados et extrados des aubes qui sont soumis aux forces centrifuges ont tendance à se déplacer radialement vers l'extérieur. Les forces centrifuges engendrent donc des forces importantes au niveau du raccordement entre la pale et la plate-forme de l'aube, et créent des contraintes élevées dans cette zone de raccordement et plus particulièrement à la jonction entre le bord de fuite et la plate-forme de l'aube.

Ces contraintes sont susceptibles de fragiliser les aubes et de réduire leur durée de vie.

L'invention a notamment pour but d'apporter une solution simple, économique et efficace à ce problème.

Elle a pour objet une aube de compresseur ou de turbine à gaz dans laquelle on limite les efforts appliqués par les forces centrifuges à la zone de raccordement de la pale à la plate-forme de l'aube.

Elle propose à cet effet une aube de rotor d'un compresseur ou d'une turbine à gaz, comprenant un extrados ou surface extérieure convexe et un intrados ou surface intérieure concave, reliés à leurs extrémités amont par un bord d'attaque et à leurs extrémités aval par un bord de fuite des gaz, une plate-forme reliant l'extrados et l'intrados à un pied d'aube, et au moins un raidisseur formé par un voile plan de matière reliant la partie aval de la plate-forme au pied d'aube, ce raidisseur s'étendant perpendiculairement à la plate-forme et transversalement ou en direction circonférentielle par rapport à l'axe du rotor, caractérisée en ce que, pour réduire les contraintes dans la zone de raccordement du bord de fuite à la plate-forme, le raidisseur comprend au moins une entaille ou découpe formée sensiblement au niveau du bord de fuite.

Cette entaille ou découpe, formée au niveau du bord de fuite, confère au raidisseur et donc à la plate-forme une relative souplesse dans cette zone, ce qui leur permet de se déformer légèrement et de suivre la déformation du bord de fuite lorsque l'aube est soumise aux forces centrifuges. Cela se traduit par une réduction sensible des contraintes dans la zone de raccordement entre la pale et la plate-forme de l'aube et par une augmentation de sa durée de vie.

De plus, une majeure partie du raidisseur est conservée, de sorte que celui-ci remplit toujours sa fonction de support de chemise d'étanchéité.

Dans un premier mode de réalisation de l'invention, la découpe est formée à l'extrémité du raidisseur située sensiblement au droit du bord de fuite.

Elle peut s'étendre sur une partie ou sur sensiblement toute la hauteur du raidisseur entre son bord radialement interne et la plate-forme et/ou s'étendre en direction transversale ou circonférentielle sur une fraction de la longueur du raidisseur.

Dans un second mode de réalisation de l'invention, une entaille est formée dans le bord radialement interne du raidisseur et s'étend jusqu'au voisinage de la plate-forme. La forme de cette entaille peut être quelconque, avec des bords droits, obliques ou incurvés, par exemple.

En fonctionnement, l'extrémité du raidisseur située au droit du bord de fuite forme une masse qui est déformée en même temps que l'intrados et l'extrados de l'aube. Ceci permet à la partie aval de la plate-forme de se déformer plus facilement et de mieux suivre la déformation de l'intrados et l'extrados et donc de limiter davantage les contraintes dans leur zone de raccordement à la plate-forme.

La découpe ou l'entaille du raidisseur est réalisable par usinage ou de fonderie avec l'aube.

L'invention propose également une turbine industrielle ou de turboréacteur, caractérisée en ce qu'elle comprend une pluralité d'aubes dont les raidisseurs comprennent au moins une entaille ou découpe précitée.

Elle propose également un compresseur industriel ou de turboréacteur, équipé d'aubes du type précité.

L'invention concerne également une turbomachine, telle qu'un turboréacteur ou un turbopropulseur d'avion, caractérisée en ce qu'elle comprend une pluralité d'aubes du type précité.

D'autres avantages et caractéristiques de l'invention apparaîtront à la lecture de la description suivante faite à titre d'exemple non limitatif et en référence aux dessins annexés dans lesquels :
- la figure 1 est une vue schématique en perspective d'une aube de rotor de la technique connue, vue du dessous et du côté amont ;
- la figure 2 est une vue schématique en perspective d'une aube de rotor selon l'invention, vue du dessous et du côté amont ;
- la figure 3 est une vue schématique en perspective d'une variante de réalisation de l'aube de rotor selon l'invention, vue du dessous et du côté amont ;
- la figure 4 est une vue schématique en perspective d'une autre variante de réalisation de l'aube de rotor selon l'invention, vue du dessous et du côté amont.

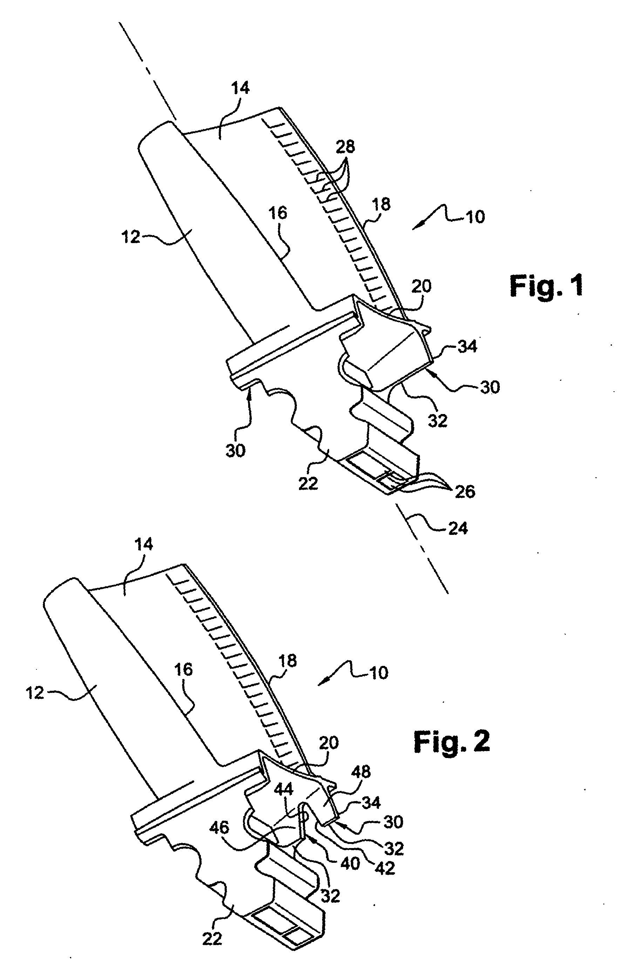

On se réfère d'abord à la figure 1, qui représente une aube 10 de rotor d'un compresseur ou d'une turbine à gaz, en particulier d'un turboréacteur, selon la technique antérieure.

Cette aube 10 comprend une pale rattachée à une plateforme et comportant un extrados 12 ou surface extérieure convexe et un intrados 14 ou surface intérieure concave qui sont reliés à leurs extrémités amont par un bord 16 d'attaque et à leurs extrémités aval par un bord 18 de fuite des gaz qui s'écoulent dans le compresseur ou la turbine à gaz.

La pale de l'aube 10 est raccordée par la plateforme 20 sensiblement rectangulaire à un pied 22 au moyen duquel l'aube 10 est montée sur un disque (non représenté) du rotor du compresseur ou de la turbine à gaz, par emmanchement de ce pied 22 dans une cavité de forme correspondante de la périphérie du disque de rotor.

Grâce à cet emmanchement mâle / femelle, qui est du type en sapin dans l'exemple représenté, l'aube 10 est retenue radialement sur le disque de rotor. D'autres moyens sont prévus pour bloquer axialement le pied 22 de l'aube 10 dans la cavité du disque.

Chaque disque de rotor comprend une pluralité d'aubes 10 réparties régulièrement sur sa périphérie externe et coopérant avec des étages d'aubes fixes de stator disposés entre deux disques de rotor.

L'aube 10 est ventilée intérieurement et refroidie au moyen de conduits de circulation d'air, qui s'étendent parallèlement à l'axe longitudinal 24 de l'aube 10 et qui sont alimentés par des orifices 26 débouchant à l'extrémité du pied 22 de l'aube 10. Des fentes de sortie d'air 28 alimentées par ce réseau sont formées sur une partie de l'intrados 14 proche du bord de fuite 18.

La plate-forme 20 est également reliée au pied d'aube 22 par des voiles plans appelés raidisseurs 30 qui s'étendent sous la plate-forme 20 à ses extrémités amont et aval, de façon sensiblement perpendiculaire à la plate-forme 20 et transversalement ou en direction circonférentielle par rapport à l'axe de rotation lorsque l'aube 10 est montée sur un disque de rotor.

Le raidisseur aval 30 est situé sous la jonction entre le bord de fuite 18 et la plate-forme 20 et comprend un bord radialement interne 32 sensiblement parallèle à la plate-forme 20 et relié au pied d'aube 22, et un bord latéral 34 sensiblement perpendiculaire à la plate-forme 20 et relié au bord correspondant de la plate-forme 20.

De chaque côté de la plate-forme 20, les deux raidisseurs 30 délimitent entre eux un logement d'une chemise d'étanchéité (non représentée) qui est agencée sous la plate-forme 20 et qui s'étend entre cette aube 10 et l'aube adjacente du disque de rotor.

Ces chemises d'étanchéité empêchent le passage d'air depuis la partie interne de la turbine ou du compresseur radialement vers l'extérieur entre les plates-formes 20 des aubes adjacentes, et inversement empêchent le passage de gaz ou d'air depuis l'extérieur vers la partie interne du compresseur ou de la turbine à gaz. L'air froid de la partie interne peut s'engager ainsi dans les orifices 26 des pieds 22 des aubes 10.

Les raidisseurs 30 rigidifient également la plate-forme 20 et l'empêchent de fléchir vers l'extérieur autour d'un axe parallèle à l'axe de rotation.

En fonctionnement, lorsque les aubes 10 sont soumises à des forces centrifuges importantes qui créent des efforts élevés, notamment dans les zones de raccordement des pales aux plates-formes 20, les plates-formes 20 rigidifiées par les raidisseurs 30 résistent à ces efforts, ce qui génère des contraintes dans ces zones de raccordement.

L'invention propose, pour limiter ces contraintes, de former au moins une entaille ou une découpe dans la partie du raidisseur aval 30 située sous la jonction entre le bord de fuite 18 et la plate-forme 20.

En figure 2, est représenté un premier mode de réalisation de l'invention dans lequel le raidisseur 30 comprend une entaille 40 qui s'étend de son bord radialement interne 32 jusqu'au voisinage de la plate-forme 20. La forme de cette entaille peut être quelconque, avec des bords droits, obliques ou incurvés. Dans l'exemple représenté, cette entaille 40 est sensiblement en forme de V inversé et comprend un bord 42 sensiblement perpendiculaire à la plate-forme 20 et parallèle au bord latéral d'extrémité 34 du raidisseur 30, et un bord 44 qui est oblique par rapport à la plate-forme 20 et qui relie l'extrémité supérieure du bord 42 voisine de la plate-forme 20 au bord radialement interne 32 du raidisseur 30.

Le raidisseur 30 comprend donc deux parties distinctes : une partie 46 reliant la plate-forme 20 au pied d'aube 22 et destinée à rigidifier la plate-forme 20, et une autre partie 48 située à l'extrémité du raidisseur 30 sous la zone de raccordement du bord de fuite 18 à la plate-forme 20 et susceptible de se déformer lorsqu'elle est soumise aux forces centrifuges et servant de support à une chemise d'étanchéité. Cette partie 48 du raidisseur 30 peut suivre la déformation de la jonction entre le bord de fuite 18 et la plate-forme 20.

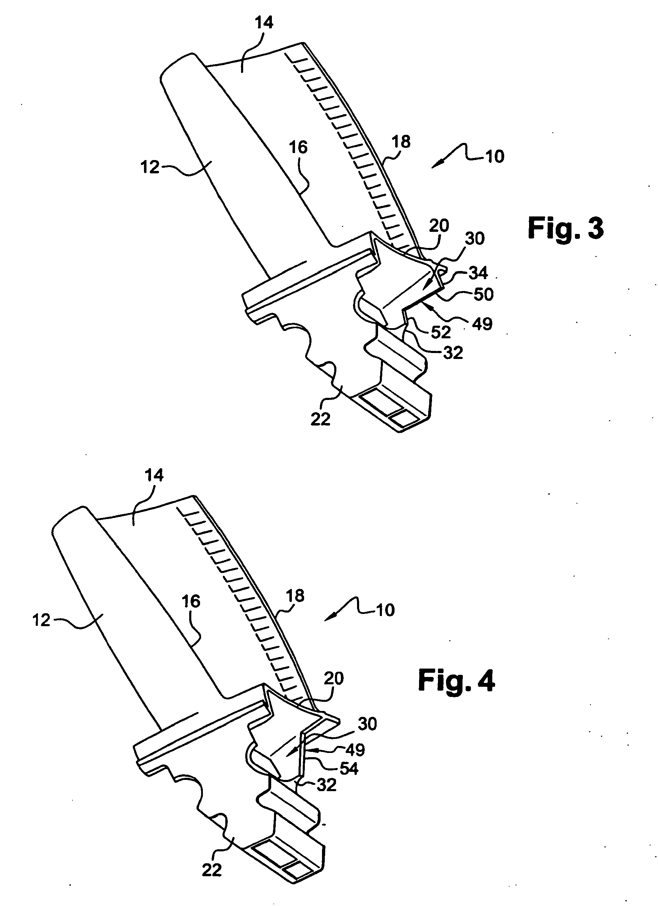

En figure 3, on a représenté un second mode de réalisation de l'invention dans lequel le bord latéral 34 du raidisseur 30 relié au bord de la plate-forme 20 comprend une découpe 49 qui s'étend sur une partie de la hauteur du raidisseur 30 depuis son bord radialement interne 32 et sur une fraction de la longueur du raidisseur 30 en direction transversale ou circonférentielle. La forme de cette découpe peut être quelconque, avec des bords droits, obliques ou incurvés. Le raidisseur 30 a dans cet exemple une forme sensiblement en L avec un bord 50 parallèle à la plateforme 20 et relié à la partie restante du bord latéral 34 du raidisseur 30, et avec un bord droit ou oblique 52 qui est relié à la partie restante du bord radialement interne 32 du raidisseur 30.

La découpe 49 du raidisseur 30 permet une déformation de la partie aval de la plate-forme 20 située sous le bord de fuite 18 en fonctionnement du compresseur ou de la turbine et réduit les efforts exercés sur la zone de raccordement à la plate-forme 20.

Dans la variante de réalisation de la figure 4, la découpe 49 s'étend sur sensiblement toute la hauteur du raidisseur 30 depuis son bord radialement interne 32. Le raidisseur 30 a dans cet exemple une forme trapézoïdale avec un bord 54 oblique par rapport à la plate-forme 20 et qui relie celle-ci à la partie restante du bord radialement interne 32 du raidisseur 30. Cette partie trapézoïdale correspond pour l'essentiel à la partie 46 de l'exemple de réalisation de la figure 2 et a pour fonction de rigidifier la plate-forme. La partie de la plate-forme 20 située sous le bord de fuite 18 comporte moins de masse que dans l'exemple de la figure 2 et est un peu moins sensible aux forces centrifuges tout en présentant une certaine souplesse en raison de la suppression locale du raidisseur 30.

L'entaille 40 ou la découpe 49 du raidisseur est réalisée par usinage ou de fonderie.

Des calculs en simulation ont montré que l'invention permet un gain significatif sur la durée de vie des aubes des turbines à gaz des turboréacteurs.

## Revendications

1. Aube (10) de rotor d'un compresseur ou d'une turbine à gaz, comprenant un extrados (12) ou surface extérieure convexe et un intrados (14) ou surface intérieure concave, reliés à leurs extrémités amont par un bord (16) d'attaque et à leurs extrémités aval par un bord (18) de fuite des gaz, une plate-forme (20) reliant l'extrados (12) et l'intrados (14) à un pied d'aube (22), et au moins un raidisseur (30) formé par un voile plan de matière reliant la partie aval de la plate-forme (20) au pied d'aube (22), ce raidisseur (30) s'étendant perpendiculairement à la plate-forme (20) et transversalement ou en direction circonférentielle par rapport à l'axe du rotor, **caractérisée en ce que**, pour réduire les contraintes dans la zone de raccordement du bord de fuite (18) à la plate-forme (20), le raidisseur (30) comprend au moins une entaille ou découpe (40, 49) formée sensiblement au niveau du bord de fuite (18).

2. Aube selon la revendication 1, **caractérisée en ce que** ladite découpe (49) est formée à l'extrémité du raidisseur (30) située sensiblement au droit du bord de fuite (18).

3. Aube selon la revendication 2, **caractérisée en ce que** ladite découpe (49) s'étend sur sensiblement toute la hauteur du raidisseur (30) entre son bord radialement interne (32) et la plate-forme (20).

4. Aube selon la revendication 2, **caractérisée en ce que** ladite découpe (49) s'étend sur une partie de la hauteur du raidisseur (30) depuis son bord radialement interne (32).

5. Aube selon la revendication 3 ou 4, **caractérisée en ce que** ladite découpe (49) comprend des bords droits, obliques ou incurvés.

6. Aube selon l'une des revendications 2 à 5, **caractérisée en ce que** ladite découpe (49) s'étend en direction transversale ou circonférentielle sur une fraction de la longueur du raidisseur (30).

7. Aube selon la revendication 1, **caractérisée en ce que** le raidisseur comprend une entaille (40) formée dans son bord radialement interne (32) et s'étendant jusqu'au voisinage de la plate-forme (20).

8. Aube selon la revendication 7, **caractérisée en ce que** ladite entaille (40) comprend des bords droits, obliques ou incurvés.

9. Aube selon la revendication 7 ou 8, **caractérisée en ce que** l'entaille (40) comprend un bord (42) sensiblement perpendiculaire à la plate-forme (20) et voisin de l'extrémité du raidisseur (30) située sensiblement au droit du bord de fuite (18), et un bord (44) oblique par rapport à la plate-forme (20).

10. Aube selon l'une des revendications précédentes, **caractérisée en ce que** la découpe ou l'entaille (40, 49) est réalisée par usinage ou de fonderie.

11. Turbine industrielle ou de turboréacteur, **caractérisée en ce qu'**elle comprend une pluralité d'aubes (10) selon l'une des revendications précédentes.

12. Compresseur industriel ou de turboréacteur, **caractérisé en ce qu'**il comprend une pluralité d'aubes (10) selon l'une des revendications 1 à 10.

13. Turbomachine, telle qu'un turboréacteur ou un turbopropulseur d'avion, **caractérisée en ce qu'**elle comprend une pluralité d'aubes (10) selon l'une des revendications 1 à 10.

## Claims

1. Rotor blade (10) for a compressor or a gas turbine, comprising a convex outer surface or suction side (12) and a concave inner surface or pressure side (14), which are joined at their upstream ends by a leading edge (16) and at their downstream ends by a trailing edge (18) for the gases, a platform (20) connecting the suction side (12) and the pressure side (14) to a blade root (22), and at least one stiffener (30) formed by a flat web of material joining the downstream part of the platform (20) to the blade root (22), this stiffener (30) extending perpendicular to the platform (20) and transversely or circumferentially with respect to the axis of the rotor, **characterized in that**, to reduce the stresses in the joint region where the trailing edge (18) joins the platform (20), the stiffener (30) includes at least one notch or cut-away (40, 49) formed substantially level with the trailing edge (18).

2. Blade according to Claim 1, **characterized in that** the said cut-away (49) is formed **in that** end of the stiffener (30) which lies substantially in line with the trailing edge (18).

3. Blade according to Claim 2, **characterized in that** the said cut-away (49) extends over substantially the entire height of the stiffener (30) between its radially internal edge (32) and the platform (20).

4. Blade according to Claim 2, **characterized in that** the said cut-away (49) extends from its radially internal edge (32) over part of the height of the stiffener (30).

5. Blade according to Claim 3 or 4, **characterized in that** the said cut-away (49) has straight oblique or curved edges

6. Blade according to one of Claims 2 to 5, **characterized in that** the said cut-away (49) extends transversely or circumferentially over a fraction of the length of the stiffener (30).

7. Blade according to Claim 1, **characterized in that** the stiffener includes a notch (40) formed in its radially internal edge (32) and extending as far as a point close to the platform (20).

8. Blade according to Claim 7, **characterized in that** the said notch (40) has straight, oblique or curved edges.

9. Blade according to Claim 7 or 8, **characterized in that** the notch (40) includes an edge (42) approximately perpendicular to the platform (20) and close to that end of the stiffener (30) which lies substantially in line with the trailing edge (18), and an edge (44) that is oblique to the platform (20).

10. Blade according to one of the preceding claims, **characterized in that** the cut-away or notch (40, 49) is produced by machining or by casting.

11. Turbojet or industrial turbine, **characterized in that** it comprises a plurality of blades (10) according to one of the preceding claims.

12. Turbojet or industrial compressor, **characterized in that** it comprises a plurality of blades (10) according to one of Claims 1 to 10.

13. Turbomachine, such as an aircraft turbojet or turboprop engine, **characterized in that** it comprises a plurality of blades (10) according to one of Claims 1 to 10.

## Patentansprüche

1. Rotorschaufel (10) eines Verdichters oder einer Gasturbine, mit einer Saugseite (12) oder konvexen Außenseite und einer Druckseite (14) oder konkaven Innenseite, die an ihren vorderen Enden durch eine Vorderkante (16) und an ihren hinteren Enden durch eine Gasaustrittskante (18) miteinander verbunden sind, wobei eine Plattform (20) die Saugseite (12) und die Druckseite (14) mit einem Schaufelfuß (22) verbindet, und wobei mindestens eine Aussteifung (30), die von einer ebenen Werkstoffschale gebildet wird, den hinteren Teil der Plattform (20) mit dem Schaufelfuß (22) verbindet, wobei diese Aussteifung (30) sich im rechten Winkel zu der Plattform (20) und quer oder in Umfangsrichtung zur Achse des Rotors erstreckt,
**dadurch gekennzeichnet,**
**dass** die Aussteifung (30), um die Belastungen in dem Anschlussbereich zwischen der Austrittskante (18) und der Plattform (20) zu verringern, mindestens einen Einschnitt oder Ausschnitt (40, 49) aufweist, der im Wesentlichen in Höhe der Austrittskante (18) gebildet ist.

2. Schaufel nach Anspruch 1,
**dadurch gekennzeichnet,**
**dass** dieser Ausschnitt (49) an dem Ende der Aussteifung (30) gebildet ist, das sich im Wesentlichen an der Austrittskante (18) befindet.

3. Schaufel nach Anspruch 2,
**dadurch gekennzeichnet,**
**dass** dieser Ausschnitt (49) sich im Wesentlichen über die gesamte Höhe der Aussteifung (30) zwischen deren radial inneren Kante (32) und der Plattform (20) erstreckt.

4. Schaufel nach Anspruch 2,
**dadurch gekennzeichnet,**
**dass** dieser Ausschnitt (49) sich über einen Teil der Höhe der Aussteifung (30) erstreckt, und zwar von ihrer radial inneren Kante (32) aus.

5. Schaufel nach Anspruch 3 oder 4,
**dadurch gekennzeichnet,**
**dass** dieser Ausschnitt (49) gerade, schräge oder gebogene Ränder aufweist.

6. Schaufel nach einen der Ansprüche 2 bis 5,
**dadurch gekennzeichnet,**
**dass** dieser Ausschnitt (49) sich in Querrichtung oder in Umfangsrichtung über einen Teil der Länge der Aussteifung (30) erstreckt.

7. Schaufel nach Anspruch 1,
**dadurch gekennzeichnet,**
**dass** die Aussteifung (30) einen Einschnitt (40) enthält, der in ihrer radial inneren Kante (32) gebildet ist und sich bis in die Nähe der Plattform (20) erstreckt.

8. Schaufel nach Anspruch 7,
**dadurch gekennzeichnet,**
**dass** dieser Einschnitt (40) gerade, schräge oder gebogene Ränder aufweist.

9. Schaufel nach Anspruch 7 oder 8,
**dadurch gekennzeichnet,**
**dass** der Einschnitt (40) einen Rand (42) aufweist, der im Wesentlichen im rechten Winkel zur Plattform (20) und in der Nähe des Endes der Aussteifung (30) verläuft, das sich im Wesentlichen an der Austrittskante (18) befindet, sowie einen Rand (44) aufweist, der schräg zur Plattform (20) verläuft.

10. Schaufel nach einen der vorherigen Ansprüche,
**dadurch gekennzeichnet,**
**dass** der Ausschnitt oder der Einschnitt (49, 40) durch Bearbeitung oder durch Gießen hergestellt wird.

11. Industrielle Turbine oder Turbotriebwerks-Turbine,
**dadurch gekennzeichnet,**
**dass** sie eine Vielzahl von Schaufeln (10) gemäß einem der vorherigen Ansprüche enthält.

12. Industrieller Verdichter oder Verdichter eines Turbotriebwerks,
**dadurch gekennzeichnet,**
**dass** er eine Vielzahl von Schaufeln (10) gemäß einem der Ansprüche 1 bis 10 enthält.

13. Turbomaschine wie z. B. ein Turbotriebwerk oder ein Turboprop-Antrieb eines Flugzeugs,
**dadurch gekennzeichnet,**
**dass** er eine Vielzahl von Schaufeln (10) gemäß einem der Ansprüche 1 bis 10 enthält.
